Europäisches Patentamt

European Patent Office

Office européen des brevets

(19)

(11) Numéro de publication: **0 412 919 A1**

(12) **DEMANDE DE BREVET EUROPEEN**

(21) Numéro de dépôt: **90420367.6**

(22) Date de dépôt: **02.08.90**

(51) Int. Cl.⁵: **B23Q 3/155**

(30) Priorité: **07.08.89 FR 8910851**

(43) Date de publication de la demande:
**13.02.91 Bulletin 91/07**

(84) Etats contractants désignés:
**AT BE CH DE ES GB IT LI NL SE**

(71) Demandeur: **RAFER S.A.**
**Route du Coin**
**F-42400 Saint Chamond(FR)**

(72) Inventeur: **Rafer, Jean Claude**
**4, rue Paul Valéry**
**F-42400 Saint Chamond(FR)**

(74) Mandataire: **Dupuis, François**
**Cabinet Laurent et Charras, 3 Place de**
**l'Hôtel-de-Ville, BP 203**
**F-42005 St. Etienne Cédex 1(FR)**

(54) **Distributeur d'outils à changement automatique pour machines-outils et similaires.**

㊗ Distributeur d'outils à changement automatique pour machines-outils et similaires.
Ce distributeur est remarquable en ce qu'il comprend un moyen support mobile agencé pour recevoir une pluralité de dispositifs (D) de maintien et de verrouillage du cône porte-outil (3), chaque dispositif étant agencé avec une structure de réception (5) du cône porte-outil correspondant, et en ce que des moyens sont disposés sur le plan supérieur de ladite structure en assurant un blocage et verrouillage du cône porte outil en s'insérant sous la queue de celui-ci en position de débordement supérieur, et en ce que l'un des moyens de blocage et verouillage est escamotable et orientable angulairement dans un plan vertical sous l'effet d'un moyen de poussée autorisant l'engagement ou le désengagement du cône porte outil de la structure de réception.

FIG 1

EP 0 412 919 A1

L'invention a pour objet un distributeur d'outils à changement automatique pour machines-outils et similaires.

L'invention se rattache au secteur technique des machines outils, et leurs composants en particulier pour le changement des outils.

Il existe déjà de très nombreux systèmes de changement automatique d'outils plus ou moins complexes et d'un prix de revient souvent élevé. Ces mêmes porte-outils sont généralement maintenus par des demi-pinces formant crochets venant enserrer et maintenir l'outil par sa collerette. Ces pinces doivent être profilées pour être ouverteS par des vérins exigeant ainsi des profils bien particuliers.

Le but recherché selon l'invention étant de concevoir un système de fabrication simplifiée et parfaitement adaptable pour tous types de machines-outils.

Selon une première caractéristique le distributeur est remarquable en ce qu'il comprend un moyen support mobile agencé pour recevoir une pluralité de dispositifS de maintien et de verrouillage des cônes porte-outils, chaque dispositif étant agencé avec une structure de réception du cône porte-outils correspondant, et en ce que des moyens sont disposés sur le plan supérieur de ladite structure en assurant un blocage et verrouillage du cône porte outils en s'insérant sous la queue de celui-ci, en position de débordement supérieur, et en ce que l'un des moyens de blocage et verrouillage est escamotable et orientable angulairement dans un plan vertical sous l'effet d'un moyen de poussée autorisant l'engagement ou le désengagement du cône porte-outils de la structure de réception.

Ces caractéristiques et d'autres encore ressortiront bien de la suite de la description.

Pour fixer l'objet de l'invention illustré d'une manière non limitative aux figures des dessins où :

La figure 1 est une vue de profil illustrant le distributeur selon l'invention.

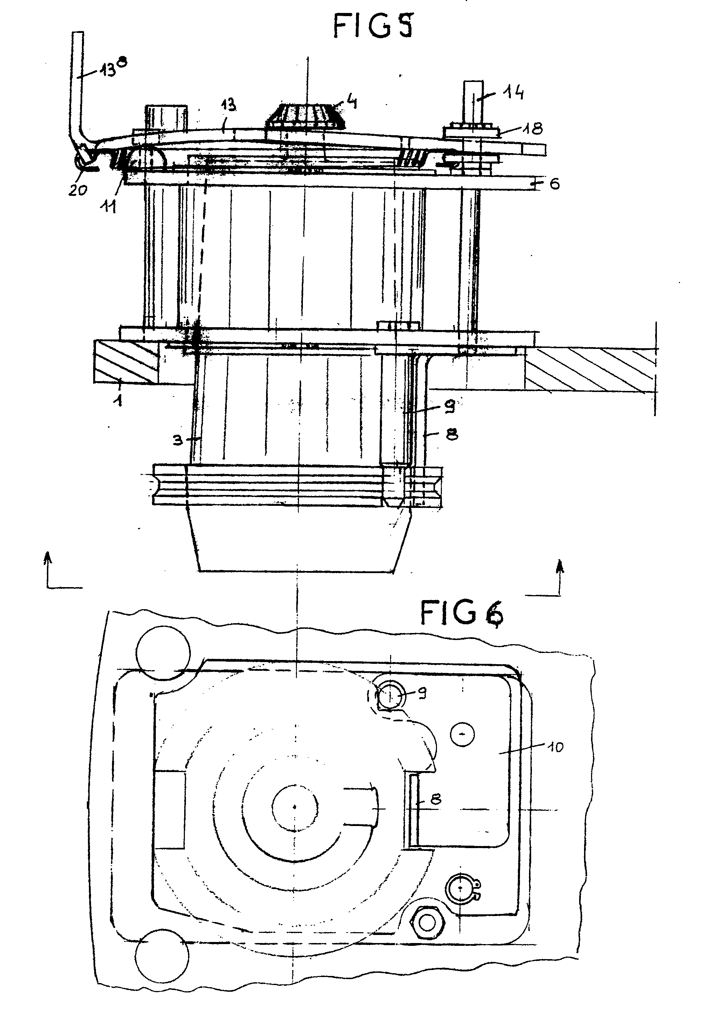

La figure 2 est une vue en plan du distributeur selon la figure 1.

La figure 3 est une vue partielle et en coupe illustrant l'engagement du cône porte-outils dans un dispositif de maintien selon l'invention.

La figure 4 est une vue en plan selon la figure 3.

La figure 5 est une vue partielle et en coupe illustrant le verrouillage en position du cône porte-outil sur le distributeur.

La figure 6 est une vue de dessous selon la figure 5 montrant en particulier la fixation de chaque dispositif.

Afin de rendre plus concret l'objet de l'invention, on le décrit maintenant d'une manière non limitative illustrée aux figures des dessins.

Selon l'invention, le distributeur automatique d'outils est adaptable soit à partir d'un moyen mobile qui peut être rotatif (1) soit à partir d'une chaine de convoyage non illustrée, et se positionnant près d'une machine-outils ou d'un centre d'usinage.

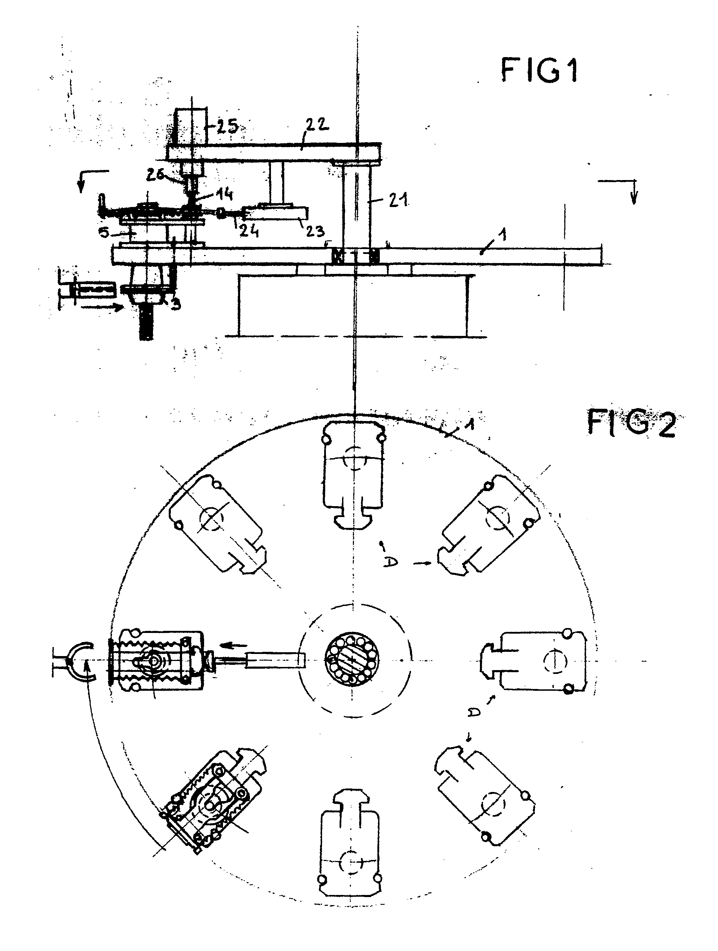

Si l'on fait référence de manière non limitative à la figure 1, le distributeur comprend un support rotatif (1) sous forme d'un plateau horizontal circulaire ou barillet orienté en rotation sur un bâti (2) et pouvant être commandé de toutes manières appropriées.

Sur sa périphérie circulaire, le plateau reçoit une pluralité de dispositifs (D) de maintien et de verrouillage des cônes porte-outils (3). Une des originalités de l'invention réside dans le fait que les cônes porte-outils (3) ne sont pas maintenus par leur collerette intermédiaire servant à l'accouplement avec la broche de la machine-outil, mais par leur queue (4) arrière s'insérant dans la broche et maintenue en position par des moyens de verrouillage classiques.

Une seconde originalité de l'invention réside dans le fait que le cône de la machine-outil est bloqué en position dans le dispositif de maintien du distributeur en évitant tout balancement ou jeu de position par une orientation angulaire particulière du moyen de verrouillage.

Ainsi le distributeur d'outils à changement automatique pour machines-outils et similaires est remarquable en ce qu'il comprend un moyen support mobile agencé pour recevoir une pluralité de dispositifs (D) de maintien et de verrouillage des cônes porte-outils (3), chaque dispositif étant agencé avec une structure de réception (5) du cône porte-outil correspondant.

Des moyens sont disposés sur le plan supérieur de ladite structure en assurant un blocage et verrouillage du cône porte-outil en s'insérant sous la queue de celui-ci en position de débordement supérieur ; l'un des moyens de blocage et verrouillage et escamotable et orientable angulairement dans un plan vertical sous l'effet d'un moyen de poussée autorisant l'engagement ou le désengagement du cône porte-outil de la structure de réception.

Plus particulièrement, ainsi qu'il apparait aux dessins, les dispositifs (D) sont régulièrement disposés sur le pourtour du plateau circulaire support. Chaque dispositif (D) comprend tout d'abord une structure (5) de réception des cônes porte-outils. Cette structure est ainsi avantageusement constituée d'un manchon (5) disposé verticalement avec un alésage intérieur conique (5.1) pour la réception du cône porte-outil, ledit manchon étant agencé par ses deux extrémités avec des portées (5.1-5.2) sur lesquelles se positionnent respectivement une plaque supérieure (6) et une plaque inférieure (7) maintenues par circlips (8) ou autrement.

La plaque inférieure (7) de forme sensiblement rectangulaire est agencée sur sa face arrière pour recevoir une patte (8) profilée en L et dont la grande branche verticale est susceptible de s'engager dans l'une des encoches formées sur la collerette du cône porte-outil. Ladite plaque (7) reçoit également, un doigt (9) profilé susceptible de s'engager dans un évidement profilé en V formé sur la collerette précitée. Ainsi les deux moyens (8-9) assurent l'orientation angulaire et le blocage en position du cône porte-outil.

La patte (8) peut être profilée à sa base avec une partie d'appui formant plaque (10) sur laquelle prend appui et se fixe le doigt précité. La plaque inférieure (7) se trouve même du côté du plus grand diamètre de l'alésage conique. La plaque supérieure (6) se trouve côté du petit diamètre de l'alésage conique et se situe sensiblement en retrait de l'extrémité de celui-ci et du manchon. Sur sa partie avant la plaque supérieure (6) reçoit transversalement une pièce semi-cylindrique (11) en matériau rigide non déformable et faisant office de rampe de renvoi. La génératice supérieure de cette pièce se situe sensiblement dans le même plan que le plan transversal exterieure du manchon. Cette pièce de renvoi formant rampe est fixée de préférence par deux vis (12) sur le plateau supérieur. Ces vis faisant office de butées sont écartées l'une del'autre par autoriser le passage d'une plaque de verrouillage (13) profilée. A l'arrière du plateau supérieur sont disposés deux axes (14-15) de grande largeur et pouvant servir d'entretoises entre les deux plateaux (6 et 7) tout en débordant au-delà du plateau supérieur. Ces deux doigts sont écartés l'un de l'autre pour laisser le passage et le déplacement de la plaque de verrouillage ainsi qu'il sera décrit par la suite. Ladite plaque est ainsi maintenue en position par deux brides superposées (16-17) la prenant en quelque sorte en sandwich, lesdites brides étant positionnées et centrées sur les axes (14-15) avec des rondelles (18) ou circlips de verrouillage (17) appropriés.

La plaque de verrouillage (13) présente un profil très particulier en L avec une base présentant une partie rectiligne (13.1) comprenant la partie centrale avec une découpe (13.2) profilée se prolongeant par une patte ou languette (13.3) s'engageant entre les axes (14-15) et débordant extérieurement en formant une languette, des échancrures (13.4) longitudinales étant établies sur les chants de la plaque. Les axes (14-15) pénétrant dans les échancrures définissent les limites de déplacement de la plaque de verrouillage. Dans sa partie centrale, celle-ci est agencée avec une ouverture profilée (13.2) comprenant en fait deux zones successives, à savoir une ouverture circulaire (13.5) de diamètre autorisant le passage et dégagement de la queue du cône porte-outil, et une ouverture oblongue (13.6) de plus petite largeur correspondant sensiblement au diamètre de la portée de raccordement entre la queue du cône porte-outil et la partie conique de celui-ci proprement dite.

Par ailleurs, la plaque de verrouillage se prolonge à l'avant par une forme sensiblement curviligne (13.3) orientée vers le bas susceptible de venir en appui et guidage sur la rampe (11) précitée, puis par un retour ou rabat perpendiculaire (13.8) faisant office de plaque de butée ou d'appui. Dans la zone de raccordement un rabat conférant à la plaque une forme en L, sont réalisées deux languettes de prolongement (13.9) avec des échancrures ou évidement pour l'insertion de l'extrémité (20.1) d'un moyen de rappel élastique (20) dont l'autre extrémité (20.2) est fixée à l'une des brides (16-17) de guidage de l'autre extrémité de la plaque. Enoutre, la partie curviligne de la plaque est agencée sur ses chants avec des échancrures (13.10) pour le passage des butées de fin de course de la plaque constituées par exemple les moyens de fixation de la rampe (11).

Selon une autre disposition, le distributeur est agencé au-dessus du plateau circulaire avec une colonne (21) recevant horizontalement un second plateau (22) ou potence. Celui-ci est agencé pour constituer le support d'un vérin (23) dont la tige (24) est susceptible de venir en appui sur le chant (13.11) de la plaque de verrouillage en provoquant son déplacement à l'encontre des moyens élastiques (20) précités. Par ailleurs, le second plateau circulaire reçoit dans un plan vertical un second vérin (25) dont la tige (26) se développe vers le bas et vient en butée d'appui contre l'un des axes (14-15) bloquant ainsi en indexation le plateau inférieur.

En outre, il y a lieu de préciser que le dispositif ainsi décrit est fixé sur la plaque inférieure sur le plateau circulaire par tous moyens appropriés.

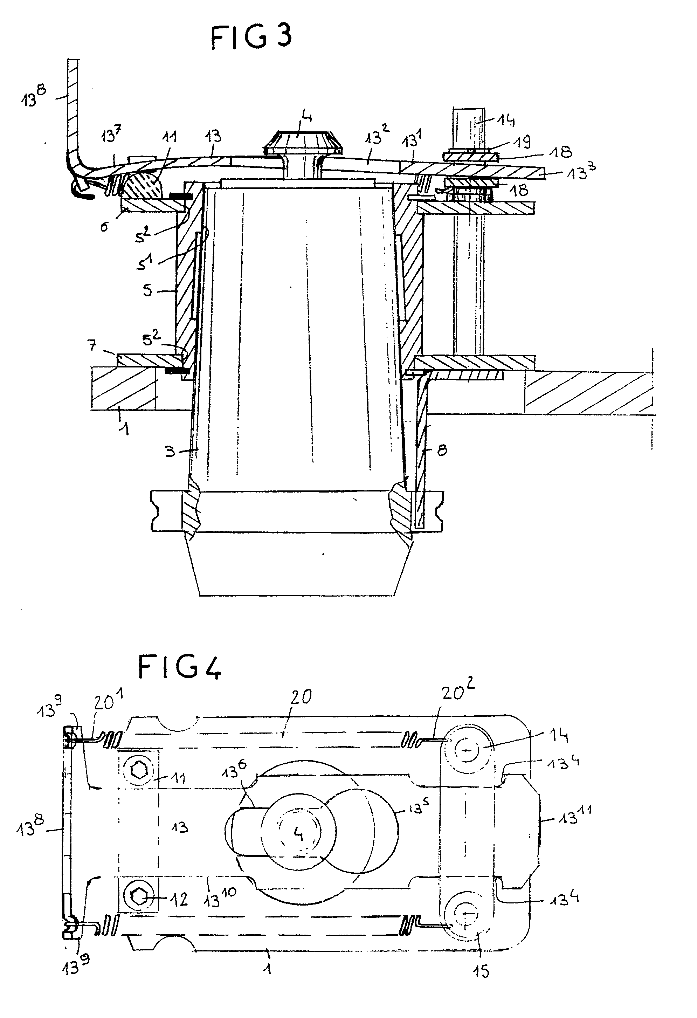

Il convient dès lors d'exposer le fonctionnement du distributeur faisant référence aux figures 3 à 6.

En position de non sollicitation, soit que le dispositif est libre de tout cône porte-outil, ou en maintien, la plaque de verrouillage est positionnée selon la figure 5. L'extrémité rectiligne de la plaque déborde très largement du dispositif, les échancrures (13.4) venant en buté avant contre les axes (14-15), tandis que l'ouverture oblongue (13.6) se situe sensiblement dans le plan axial de l'alésage conique du manchon du dispositif. Lorsqu'un outil ou cône porte-outil doit être introduit pour le chargement du distributeur ; après indexation du plateau et sélection de l'un des dispositifs, le vérin (25) vertical est actionné et sa tige vient en appui sur l'un des axes (14-15) bloquant ainsi en position l'ensemble. Le second vérin (23) horizontal est alors actionné et sa tige vient en butée contre le chant (13.11) en regard de la plaque de verrouillage. Sous l'action de poussée ladite plaque se déplace vers l'avant à l'encontre des moyens élastiques de rappel de telle sorte que l'ouverture cylindrique formée dans sa partie centrale vienne en regard de l'alésage conique du manchon. Le cône porte-outil peut alors être introduit dans ledit manchon jusqu'à déborder par sa queue au-delà du plan de la plaquette de verrouillage. Lorsque le cône porte-outil est engagé en profondeur au maximum, il existe un léger intervalle (e) entre le plan de dessous de la queue et celui supérieur de la plaque de verrouillage. Dans ces conditions en l'absence d'autres interventions, le cône porte-outils ne serait pas tenu. On procède alors au retrait du vérin (23) de manière à ramener en position initiale la plaque de verrouillage (13) sous l'action combinée des moyens de rappels (20).

De par la forme complémentaire de la rampe et de la partie curviligne de la plaque de verrouillage, celle-ci est alors légèrement relevée dans le plan vertical de sorte à venir en appui ferme et situé sous la queue du cône porte-outil. Celui-ci est alors maintenue par la plaque, en prenant appui sur la périphérie de la lumière oblongue préétablie dans la partie centrale de celle-ci. Ainsi, on obtient un excellent verrouillage en position sans qu'il y ait une quelconque possibilité de déréglage. Le cône porte-outils ne peut en aucune manière être déplacé sans action ou manipulation de la plaque de verrouillage.

Lorsque l'opérateur désire utiliser l'outil, il lui suffit alors d'actionner à nouveau le vérin (23) pour dégager la plaque de verrouillage et en conséquence de l'abaisser puisque sa partie curviligne va au-delà de la rampe, la plaque se trouvant alors dans un plan horizontal avec un intervalle de dégagement de la queue du cône porte-outils. La plaque étant écartée, le cône porte-outil peut être enlevé.

Dans le cas de la sélection d'un autre outil, le plateau circulaire est actionné à nouveau à la manière d'un barrillet après intervention des vérins d'indexation en position, et de commande de la plaque de verrouillage.

Selon une autre disposition secondaire l'un des axes (14-15) coopère avec le vérin d'indexation, tandis que l'autre axe peut constituer un moyen de repérage. Toutes les phases précitées peuvent être inclues dans un automatisme et programme déterminé nécessitant l'intervention de plusieurs outils en fonction des usinages à effectuer.

Les avantages ressortent bien de l'invention.

On souligne tout d'abord :
- la conception mécanique du distributeur évitant toutes erreurs de fonctionnement.
- l'originalité de la zone de saisie et maintien du cône porte-outil.

- la simplicité du moyen de verrouillage
- la facilité de fonctionnement même si l'un des ressorts est déterioré, la plaque de verouillage assure toujours sa fonction étant sollicitée par l'autre ressort.
- le montage et démontage sont rapides, l'entretien aisé.

Les différents dispositifs ont été décrits en étant répartis sur un plateau circulaire, mais d'autres moyens support peuvent être utilisés telle que chaîne de convoyage.

## Revendications

-1- Distributeur d'outils à changement automatique pour machines outils et similaires caratérisé en ce qu'il comprend un moyen support mobile agencé pour recevoir une pluralité de dispositifs (D) de maintien et de verrouillage du cône porte-outil (3), chaque dispositif étant agencé avec une structure de réception (5) du cône porte-outil correspondant, et en ce que des moyens sont disposés sur le plan supérieur de ladite structure en assurant un blocage et verrouillage du cône porte outil en s'insérant sous la queue de celui-ci en position de débordement supérieur, et en ce que l'un des moyens de blocage et verrouillage est escamotable et orientable angulairement dans un plan vertical sous l'effet d'un moyen de poussée autorisant l'engagement ou le désengagement du cône porte outil de la structure de réception.

-2- Distributeur selon la revendication 1 caractérisé en ce que la structure de réception du cône porte-outil est constituée d'un manchon vertical agencé avec un alésage intérieur conique (5.1) pour la réception du cône porte-outil et à ses deux extrémités pour recevoir une plaque supérieure (6) et une plaque inférieure (7) maintenue par tous moyens de verrouillage.

-3- Distributeur selon la revendication 2, caractérisé en ce que la plaque inférieure (7) est agencée sur sa face arrière avec une patte (8) profilée avec une branche verticale s'engageant dans l'une des encoches établies sur la collerette du cône porte-outil, et avec un doigt (9) profilé s'engageant dans un évidement en V formé sur ladite collerette, ladite patte et ledit doigt assurant l'orientation angulaire et le blocage en position du cône porte-outil.

-4- Distributeur selon la revendication 2 caractérisé en ce que la plaque supérieure (6) située du côté du petit diamètre de l'alésage du manchon est agencée pour recevoir transversalement un pièce profilée (11) formant rampe de renvoi sur laquelle se déplace à l'encontre de moyens élastiques (20) de rappel le moyen de verrouillage et de blocage s'insérant sous la queue du cône porte-outil.

-5- Distributeur selon la revendication 4 caractérisé en ce que le moyen de verrouillage et de blocage du cône porte-outil est constitué par une plaque profilée (13) en L comprenant une base avec une partie rectiligne (13.1) avec dans sa partie centrale une découpe (13.2) profilée pour autoriser le passage de la queue du cône porte-outil puis son serrage par dessous, ladite base se prolongeant vers l'avant par une patte ou languette (13.3) guidée entre des moyens de liaison et de bridage, en définissant par son chant arrière (13.11) une zone d'appui et de poussée, ladite plaque de verrouillage se prolongeant vers l'avant par une forme curviligne (13.7) orientée vers le bas puis par un retour ou rabat (13.8) vertical faisant office de plaque de butée et d'appui.

-6- Distributeur selon la revendication 5 caractérisé en ce que la plaque de verrouillage (13) est sollicitée en déplacement par un moyen venant en butée d'appui sur son chant (13.11) arrière, ladite plaque ayant une course de déplacement limitée définie par des moyens assurant d'une part le guidage de la plaque et d'ature part sa butée, ladite plaque étant agencée sur ces chants longitudinaux avec des échancrures (13.4-13.10) pour le passage desdits moyens.

-7- Distributeur selon la revendication 6 caractérisé en ce que les moyens de butée et limiteur de course de la plaque sont définis par les moyens de fixation (12) de la rampe (11) et par des axes (14-15) disposés à l'arrière de la plaque (6), lesdits axes (14-15) recevant des brides superposées (16-17) entre lesquelles coulisse la plaque de verrouillage.

-8- Distributeur selon la revendication 5 caractérisé en ce que la découpe (13.2) formée sur la plaque de verrouillage comprend deux zones successives définies par une ouverture circulaire (13.5) de diamètre autorisant le passage et l'introduction de la queue du cône porte-outil et une ouverture oblongue (13.6) de plus petite largeur susceptible de maintenir le cône porte-outil sous la queue de ce dernier.

-9- Distributeur selon l'une quelconque des revendications 4, 5, 6 et 7 caractérisé en ce que les moyens (20) de rappel élastique de la plaque de verrouillage (13) sont fixés par les extrémités à des languettes ou prolongements (13.4) disposés dans la zone de raccordement entre le rabat et la partie curviligne de la plaque d'une part et sur les axes de guidage et de butée d'autre part.

-10 Distributeur selon la revendication 1 caractérisé en ce que le support mobile comprend un plateau circulaire sur lequel sont disposés radialement les dispositifs récepteurs des cônes porte-outils, et un second plateau supérieur recevant un ensemble vérin (23) disposé horizontalement dont la tige (24) est susceptible de venir en appui sur les moyens de verrouillage du cône porte-outil, en exerçant une poussée pour le déplacer et autoriser l'engagement ou désengagement de ce dernier, un second ensemble vérin (25) disposé verticalement venant en appui et indexation sur le dispositif pour assurer le blocage en position lors de l'opération de changement d'outil.

-11- Distributeur selon la revendication 1 caractérisé en ce que le support mobile est une chaîne de convoyage.

# FIG 1

# FIG 2

# FIG 5

# FIG 6

# FIG 3

# FIG 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 185 494 (H. DZIEDZIC) <br> * Colonne 6, lignes 12-48; figure 2 * <br> — — — | 1,2,4-9, 11 | B 23 Q 3/155 |
| X | GB-A-2 073 623 (NEWALL ENGINEERING) <br> * Résumé; figure 4 * <br> — — — | 1 | |
| A | FR-A-2 366 097 (RATIER FOREST) <br> * Revendication 1; figure 4 * <br> — — — | 1 | |
| A | EP-A-0 028 329 (TOYODA) <br> * Résumé; figure 3 * <br> — — — | 1 | |
| A | FR-A-2 529 127 (DANA CORP.) <br> * Figure 4 * <br> — — — | 3 | |
| A | EP-A-0 053 646 (TOYODA) <br> * Figure 8 * <br> — — — | 3 | |
| A | GB-A-2 149 696 (MORI MACHINERY) <br> — — — — — | | |

| DOMAINES TECHNIQUES RECHERCHES (Int. Cl.5) |
|---|
| B 23 Q |

Le présent rapport de recherche a été établi pour toutes les revendications

| Lieu de la recherche | Date d'achèvement de la recherche | Examinateur |
|---|---|---|
| La Haye | 15 novembre 90 | KORTH C-F.F.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant